# FASCICULE DE BREVET EUROPEEN

(11) **EP 0 501 852 B1**
(45) Date de publication et mention de la délivrance du brevet: **18.01.1995**
(21) Numéro de dépôt: 92400443.5
(22) Date de dépôt: 19.02.1992
(51) Int. Cl.: F16L 37/08

(54) **Dispositif de fixation d'un organe tubulaire sur un embout tubulaire de raccordement d'un composant, notamment de véhicule automobile**
Vorrichtung zur Befestigung eines rohrförmigen Organs auf einem Rohrende eines Kupplungsteils, insbesondere eines Kraftfahrzeuges
Device for fixing a tubular member to a pipe end of a coupling component, especially for a motor vehicle

(30) Priorité: 20.02.1991 FR 9102038
(43) Date de publication de la demande: 02.09.1992
(73) Titulaire: ATTAX, F-78400 Chatou (FR)
(72) Inventeur: Dubost, Dominique, F-78170 La Celle Saint Cloud (FR)
(74) Mandataire: Habasque, Etienne Joel Jean-François

(56) Documents cités:
- EP-A- 0 373 920
- US-A- 3 439 944
- MACHINE DESIGN vol. 53, no. 24, Octobre 1981, CLEVELAND, OHIO, US page 46;'PUSH-IN FITTING SEALS PNEUMATIC TUBING'

## Description

La présente invention concerne un dispositif de fixation d'un organe tubulaire sur un embout tubulaire de raccordement d'un composant, utilisable notamment dans l'industrie automobile.

Le dispositif selon l'invention peut ainsi être utilisé par exemple pour le raccordement d'un radiateur de refroidissement à un moteur de véhicule automobile.

Les véhicules automobiles modernes comportent un capot de plus en plus effilé en vue de l'amélioration du coefficient de pénétration du véhicule dans l'air.

La place disponible sous le capot, pour le radiateur, est donc réduite par rapport aux véhicules plus anciens.

L'eau du circuit de refroidissement est donc relativement moins refroidie sur les véhicules modernes et cette eau se trouve pendant la marche du véhicule, à une pression et à une température sensiblement supérieures à la pression et à la température de l'eau dans les circuits de refroidissement des véhicules plus anciens.

Cette augmentation de pression entraîne des risques de fuite, au niveau des jonctions entre les conduits de raccordement souples et les embouts de raccordement rigides, par exemple du radiateur au moteur.

Dans l'état de la technique, le conduit de raccordement ou raccord souple est engagé sur l'embout rigide correspondant et fixé de manière étanche sur cet embout grâce à un collier de serrage disposé autour du raccord souple.

Les colliers de serrage utilisés peuvent être de différents types.

On utilise par exemple des colliers élastiques, mais ces colliers n'assurent pas une très bonne étanchéité lorsque la pression dans le circuit de refroidissement est sensiblement supérieure à la pression atmosphérique.

De plus, ces colliers élastiques nécessitent l'utilisation d'outils spécifiques pour leur montage et leur démontage.

On peut également utiliser des colliers de serrage à crémaillère mais ces colliers requièrent également l'utilisation d'un outillage spécifique pour leur montage et leur démontage.

De plus, le démontage de tels colliers est une opération très difficile.

Il est également possible d'utiliser des colliers à vis à direction tangentielle, mais ces colliers sont très difficiles à placer correctement sur le raccord et l'embout. De plus, le bon serrage de ces colliers ne peut pas être contrôlé visuellement.

En conséquence, les dispositifs de jonction des circuits de refroidissement dans lesquels les raccords souples sont enfilés sur les embouts rigides du circuit et serrés par des colliers, ne donnent donc pas satisfaction dans les conditions actuelles et à fortiori dans le cas de circuits de refroidissement fonctionnant sous haute pression. De plus, ces dispositifs ne peuvent pas être montés de façon automatique.

On connaît également du document EP-A-0 373 920, un dispositif de fixation d'un organe tubulaire sur un embout tubulaire de raccordement d'un composant pouvant être intégré à un véhicule automobile, dans lequel l'organe tubulaire est fixé sur l'embout par l'intermédiaire des moyens de maintien et d'étanchéité.

Les moyens de maintien et d'étanchéité comprennent deux manchons coaxiaux à l'embout dont l'un externe est sollicité élastiquement en direction de l'embout et l'autre interne est monté déplaçable axialement entre le manchon externe et l'embout, entre une position de montage dans laquelle le manchon interne maintient le manchon externe éloigné de l'embout et une position d'accrochage dans laquelle le manchon interne libère le manchon externe, de manière à ce que celui-ci coopère avec l'organe tubulaire pour le maintenir en position sur l'embout.

Cependant, ce dispositif présente un certain nombre d'inconvénients, notamment au niveau de la complexité de sa structure et des difficultés à automatiser son montage.

Le but de l'invention est donc de résoudre ces problèmes.

A cet effet, l'invention a pour objet un dispositif de fixation d'un organe tubulaire sur un embout tubulaire de raccordement d'un composant notamment de véhicule automobile, dans lequel l'organe tubulaire est fixé sur l'embout par l'intermédiaire de moyens de maintien et d'étanchéité, comprenant deux manchons coaxiaux dont l'un externe, pouvant être relié au composant, comporte des branches déformables, sollicitées élastiquement, radialement vers l'intérieur du manchon, en direction de l'embout, à l'extrémité de chacune desquelles est prévue une portion d'accrochage en saillie vers l'intérieur du manchon et l'autre interne comporte une surface de butée radiale interne, et est monté déplaçable axialement à l'intérieur du manchon externe, entre le manchon externe et l'embout, par appui de l'organe tubulaire sur la surface de butée, entre une position de montage dans laquelle le manchon interne maintient les branches du manchon externe écartées, éloignées de l'embout, et une position d'accrochage dans laquelle ce manchon interne libére les branches du manchon externe, de manière à ce que les portions d'accrochage de celles-ci coopèrent avec l'organe tubulaire pour le maintenir en position sur l'embout.

L'invention sera mieux comprise à l'aide de la description qui va suivre, donnée uniquement à titre d'exemple et faite en se référant aux dessins annexés, sur lesquels :
- la Fig.1 représente une vue en coupe d'un dispositif de fixation selon l'invention, en position de montage;
- la Fig.2 représente une vue en bout du dispositif de fixation représenté sur la Fig.1;
- la Fig.3 représente une vue de détail d'une partie du dispositif de fixation représenté sur la Fig.1;
- la Fig.4 représente une vue en coupe du dispositif de fixation selon l'invention, en position d'accrochage;
- la Fig.5 représente une vue en bout du dispositif représenté sur la Fig.4; et
- la Fig.6 représente une vue de détail d'une partie du dispositif de fixation représenté sur la Fig.4.

Ainsi qu'on peut le voir sur ces figures, le dispositif de fixation selon l'invention peut être utilisé pour fixer un organe tubulaire 1 sur un embout tubulaire 2 de raccordement d'un composant 3, notamment d'un véhicule automobile.

Ainsi, par exemple, ce dispositif peut être utilisé pour la fixation d'une extrémité d'un conduit de raccordement souple dont l'autre extrémité est reliée à un moteur de véhicule automobile, sur un embout rigide d'un radiateur de refroidissement de celui-ci.

Dans le dispositif de fixation selon l'invention, l'organe tubulaire 1 est fixé sur l'embout par l'intermédiaire de moyens de maintien et d'étanchéité désignés par la référence générale 4 sur ces figures.

Selon l'invention, ces moyens de maintien et d'étanchéité comportent deux manchons 5 et 6 coaxiaux à l'embout, dont l'un externe 5, est relié au composant 3 et l'autre interne 6, est monté déplaçable axialement entre le manchon externe 5 et l'embout de raccordement 2.

Le manchon interne 6 comporte une surface de butée 7 prévue par exemple à l'une de ses extrémités et par exemple des portions de butée, 8 et 9, à son autre extrémité, dont la fonction sera décrite plus en détail par la suite.

Le manchon externe 5 comporte des branches, par exemple 10 et 11, déformables élastiquement et sollicitées en direction de l'embout 2. Ce manchon peut par exemple comporter quatre branches à 90° l'une par rapport à l'autre.

Ces branches peuvent par exemple être sollicitées en direction de l'embout par l'intermédiaire d'une bague élastique 12 disposée autour de l'extrémité correspondante de celui-ci.

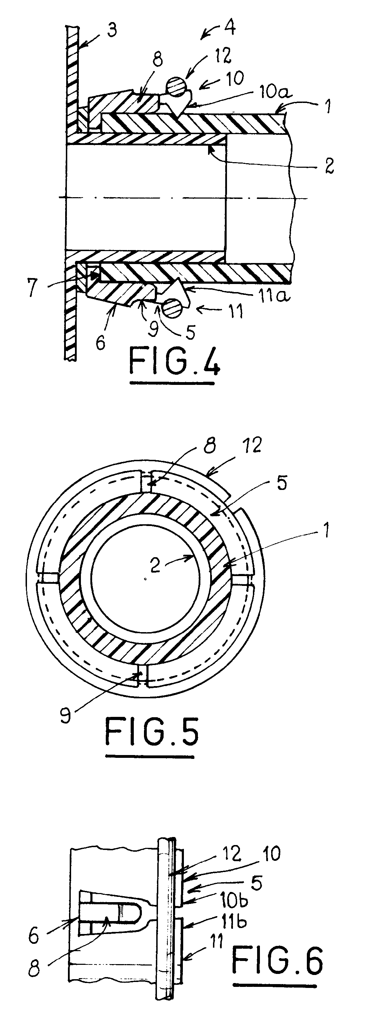

Comme on peut le voir plus clairement sur la Fig.4, l'extrémité de chacune de ces branches du manchon externe 5 comporte une portion d'accrochage 10a, 11a par exemple, en saillie vers l'intérieur du manchon.

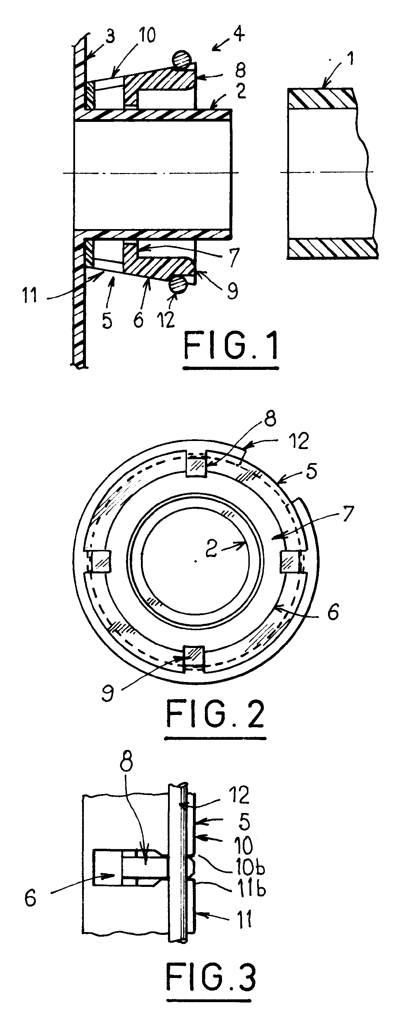

Ainsi qu'on peut le voir sur ces figures, le manchon interne 6 est monté déplaçable axialement entre le manchon externe 5 et l'embout 2, par appui de l'organe tubulaire 1 et plus particulièrement de l'extrémité de celui-ci sur la surface de butée 7 de ce manchon interne 6, entre une position de montage de l'organe tubulaire autour de l'embout, représentée sur les figures 1 à 3, dans laquelle les portions de butée 8, 9 de ce manchon interne 6, s'étendent entre les extrémités des branches du manchon externe au niveau des parties d'accrochage de celles-ci, pour maintenir les branches du manchon externe éloignées de l'embout et permettre ainsi l'engagement de l'organe tubulaire 1 autour de l'embout 2 et une position d'accrochage, représentée sur les Fig.4 à 6, dans laquelle les portions de butée 8 et 9 du manchon interne libèrent les branches du manchon externe, pour que les parties en saillie de celles-ci coopèrent avec le raccord tubulaire afin de le maintenir en position sur l'embout.

Plus particulièrement, les portions de butée 8, 9 de ce manchon interne 6 s'étendent, en position de montage du manchon interne, entre des bossages 10b et 11b (Fig.3) en saillie latérale à partir des extrémités correspondantes des branches 10 et 11 du manchon externe 5. Ceci permet de maintenir ces branches en position éloignée de l'embout 2 pour permettre le passage de l'organe tubulaire autour de celui-ci.

Le manchon interne 6 comporte avantageusement 4 portions de butée s'étendant chacune entre deux branches successives du manchon externe.

L'engagement de l'organe tubulaire autour de l'embout amène l'extrémité de celui-ci en contact contre la surface de butée 7 du manchon interne 6, de sorte que si l'utilisateur poursuit le déplacement de cet organe tubulaire, le manchon interne 6 se déplace vers la position d'accrochage représentée sur les figures 4 à 6.

Ce déplacement du manchon interne 6 et donc des portions de butée 8 et 9 de celui-ci, libère les branches 10 et 11 du manchon externe, de sorte que sous l'effet de la sollicitation élastique de la bague élastique 12, ces branches se rapprochent de l'embout 2 de sorte que les parties en saillie d'accrochage de celles-ci viennent dans une position de coopération avec l'organe tubulaire 1 afin de plaquer celui-ci contre cet embout et le maintenir en position.

On conçoit en effet, comme on peut le voir sur les Fig.3 et 6 que le coulissement du manchon interne 6 amène les portions de butée 8 et 9 de celui-ci à coulisser entre les branches 10 et 11 du manchon externe 5 d'une position active (Fig.3) entre les bossages 10b et 11b des branches du manchon externe, vers une position excamotée (Fig.6) dans une portion de fente de dimension supérieure à la distance séparant les bossages 10b et 11b, de manière que ces portions de butée n'entravent pas le rapprochement des branches du manchon externe pour assurer l'accrochage de l'organe tubulaire 1 sur l'embout 2.

On notera à cet égard que les parties en saillie 10a et 11a d'accrochage de ces branches peuvent présenter des faces inclinées facilitant l'engagement et améliorant le maintien de l'organe tubulaire sur l'embout.

Il va de soi bien entendu que d'autres modes de réalisation des portions de butée du manchon interne peuvent être envisagés.

On notera également qu'en position de montage, le manchon externe présente une forme générale tronconique ouverte en direction de l'organe tubulaire pour faciliter son engagement sur l'embout.

Enfin, il va de soi également que bien que dans le mode de réalisation décrit, le manchon interne 6 comporte des portions de butée 8 et 9 de maintien ou de libération des branches 10 et 11 du manchon externe 5, ce maintien en position éloignée et cette libération peuvent être réalisés par toute autre partie du manchon interne comme par exemple une portion d'extrémité de celui-ci sur laquelle les parties en saillie d'accrochage 10a et 11a des branches 10 et 11 du manchon externe 5 viennent en appui, en position de montage.

## Revendications

1. Dispositif de fixation d'un organe tubulaire (1) sur un embout tubulaire (2) de raccordement d'un composant (3) notamment de véhicule automobile, dans lequel l'organe tubulaire (1) est fixé sur l'embout (2) par l'intermédiaire de moyens (4) de maintien et d'étanchéité, comprenant deux manchons (5,6) coaxiaux dont l'un externe (5), pouvant être relié au composant (3), comporte des branches (10,11) déformables, sollicitées élastiquement, radialement vers l'intérieur du manchon, en direction de l'embout, à l'extrémité de chacune desquelles est prévue une portion (10a,11a) d'accrochage en saillie vers l'intérieur du manchon et l'autre interne (6) comporte une surface de butée radiale interne (7), et est monté déplaçable axialement à l'intérieur du manchon externe, entre le manchon externe (5) et l'embout (2), par appui de l'organe tubulaire (1) sur la surface de butée (7), entre une position de montage dans laquelle le manchon interne (6) maintient les branches (10,11) du manchon externe (5) écartées, éloignées de l'embout (2), et une position d'accrochage dans laquelle ce manchon interne (6) libére les branches (10,11) du manchon externe (5), de manière à ce que les portions d'accrochage de celles-ci coopèrent avec l'organe tubulaire (1) pour le maintenir en position sur l'embout (2).

2. Dispositif selon la revendication 1, caractérisé en ce qu'en position de montage, le manchon externe (5) présente une forme générale évasée ouverte en direction de l'organe tubulaire (1).

3. Dispositif selon la revendication 1 ou 2, caractérisé en ce que le manchon interne (6) comprend à proximité de l'une de ses extrémités des portions de butée (8,9) de maintien ou de libération des branches du manchon externe (5).

4. Dispositif selon la revendication 3, caractérisé en ce que la surface de butée (7) du manchon interne (6) est prévue à l'extrémité de celui-ci opposée à celle comportant les portions de butée (8,9).

5. Dispositif selon l'une quelconque des revendications 3 ou 4, caractérisé en ce qu'en position de montage, les portions de butée (8,9) du manchon interne (6) s'étendent entre les extrémités des branches (10,11) du manchon externe (5) au niveau des parties en saillie d'accrochage (10a,11a) de celles-ci.

6. Dispositif selon la revendication 5, caractérisé en ce que les portions de butée (8,9) du manchon interne (6) sont montées déplaçables à coulissement entre les branches (10,11) du manchon externe (5), entre une position active dans laquelle elles coopèrent avec des bossages latéraux (10b,11b) des extrémités des branches (10,11) du manchon externe (5) pour les maintenir en position de montage de l'organe tubulaire (1) et une position escamotée, de libération de celles-ci.

7. Dispositif selon l'une quelconque des revendications précédentes, caractérisé en ce qu'une bague élastique (12) est prévue autour de l'extrémité des branches (10,11) du manchon externe (5) pour solliciter celles-ci en direction de l'embout (2).

8. Dispositif selon l'une quelconque des revendications 3 à 7, caractérisé en ce que le manchon externe (5) comporte quatre branches élastiquement déformables et en ce que le manchon interne (6) comporte quatre portions de butée s'étendant chacune entre deux branches successives du manchon externe (5).

## Patentansprüche

1. Vorrichtung zur Befestigung eines rohrförmigen Organs (1) an einem rohrförmigen Anschlußansatz (2) eines Bauteils (3), insbesondere eines Kraftfahrzeugs, bei dem das rohrförmige Organ (1) an dem Ansatz (2) mit Hilfe von Halte- und Dichtungsmitteln (4) befestigt ist, die zwei koaxiale Manschetten (5, 6) aufweisen, deren äußere (5), die mit dem Bauteil (3) verbunden sein kann, verformbare Arme (10, 11) aufweist, die in Richtung des Ansatzes elastisch radial gegen das Innere der Manschette vorgespannt sind und an deren Ende jeweils ein zum Inneren der Manschette vorspringender Verankerungsteil (10a, 11a) vorgesehen ist, wobei die andere, innere Manschette (6) eine radiale innere Anschlagfläche (7) aufweist und derart im Inneren der äußeren Manschette zwischen der äußeren Manschette (5) und dem Ansatz (2) montiert ist, daß sie durch Anlage des rohrförmigen Organs (1) an der Anschlagfläche (7) axial beweglich ist zwischen einer Montageposition, in welcher die innere Manschette (6) die Arme (10, 11) der äußeren Manschette (5) gespreizt und von dem Ansatz (2) entfernt hält, und einer Verankerungsposition, in welcher die innere Manschette (6) die Arme (10, 11) der äußeren Manschette (5) freigibt, so daß die Verankerungsteile derselben mit dem rohrförmigen Organ (1) zusammenwirken, um es an dem Ansatz (2) in Position zu halten.

2. Vorrichtung nach Anspruch 1, dadurch gekennzeichnet, daß die äußere Manschette (5) in der Montageposition eine allgemein in Richtung des rohrförmigen Organs (1) erweiterte offene Form aufweist.

3. Vorrichtung nach Anspruch 1 oder 2, dadurch gekennzeichnet, daß die innere Manschette (6) in der Nähe eines ihrer Enden Anlagebereiche (8, 9) zum Halten oder Freigeben der Arme der äußeren Manschette (5) aufweist.

4. Vorrichtung nach Anspruch 3, dadurch gekennzeichnet, daß die Anschlagfläche (7) der inneren Manschette (6) an dem Ende derselben vorgesehen ist, das dem die Anlagebereiche (8, 9) tragenden Ende entgegengesetzt ist.

5. Vorrichtung nach Anspruch 3 oder 4, dadurch gekennzeichnet, daß in der Montageposition die Anlagebereiche (8, 9) der inneren Manschette (6) sich zwischen den Enden der Arme (10, 11) der äußeren Manschette (5) in Höhe der vorspringenden Verankerungsteile (10a, 11a) derselben erstrecken.

6. Vorrichtung nach Anspruch 5, dadurch gekennzeichnet, daß die Anlagebereiche (8, 9) der inneren Manschette (6) so montiert sind, daß sie zwischen den Armen (10, 11) der äußeren Manschette (5) gleitend beweglich sind zwischen einer aktiven Position, in der sie mit seitlichen Buckeln (10b, 11b) der Enden der Arme (10, 11) der äußeren Manschette (5) zusammenwirken, um sie in der Montagestellung für das rohrförmige Organ (1) zu halten, und einer versenkten Position zur Freigabe derselben.

7. Vorrichtung nach einem der vorstehenden Ansprüche, dadurch gekennzeichnet, daß ein elastischer Ring (12) um das Ende der Arme (10, 11) der äußeren Manschette (5) herum vorgesehen ist, um diese in Richtung auf den Ansatz (2) vorzuspannen.

8. Vorrichtung nach einem der Ansprüche 3 bis 7, dadurch gekennzeichnet, daß die äußere Manschette (5) vier elastisch verformbare Arme aufweist und daß die innere Manschette (6) vier Anlagebereiche aufweist, die sich jeweils zwischen zwei benachbarten Armen der äußeren Manschette (5) erstrecken.

## Claims

1. A device for securing a tubular member (1) on to a tubular end piece (2) for connection of a component (3) particularly in a motor vehicle, wherein the tubular member (1) is secured on the end piece (2) via retaining and scaling means (4) comprising two coaxial sleeves (5, 6), the outer one (5) of which can be connected to the component (3) and comprises deformable limbs (10, 11) which are resiliently stressed radially towards the interior of the sleeve in the direction of the end piece, and at the end of each limb a coupling portion (10a, 11a) is provided, projecting towards the interior of the sleeve, and the inner sleeve (6) comprises a radial internal stop surface (7) and, through the support of the tubular member (1) against the stop surface (7), is mounted to be axially displaceable at the interior of the outer sleeve, between the outer sleeve (5) and the end piece (2), between an assembly position in which the inner sleeve (6) maintains a separating distance between the limbs (10, 11) of the outer sleeve (5), at a distance from the end piece (2), and a coupling position in which the said inner sleeve (6) releases the limbs (10, 11) of the outer sleeve (5) in such a manner that the coupling portions thereof co-operate with the tubular member (1) to retain it in position on the end piece (2).

2. A device in accordance with claim 1, **characterised in that** in the assembly position, the outer sleeve (5) is generally funnel-shaped and open in the direction of the tubular member (1).

3. A device in accordance with claim 1 or 2, **characterised in that** in the vicinity of one of its ends, the inner sleeve (6) has stop portions (8, 9) to retain or release the limbs of the outer sleeve (5).

4. A device in accordance with claim 3, **characterised in that** the stop surface (7) on the inner sleeve (6) is provided at the end of the said sleeve opposite the end having the stop portions (8, 9).

5. A device in accordance with one of claims 3 or 4, **characterised in that** in the assembly position, the stop portions (8, 9) on the inner sleeve (6) extend between the ends of the limbs (10, 11) of the outer sleeve (5) at the level of the projecting coupling portions (10a, 11a) thereof.

6. A device in accordance with claim 5, **characterised in that** the stop portions (8, 9) on the inner sleeve (6) are mounted to be slidably displaceable between the limbs (10, 11) of the outer sleeve (5), between a working position in which they co-operate with lateral projections (10b, 11b) at the ends of the limbs (10, 11) of the outer sleeve (5) in order to retain them in the assembly position of the tubular member (1), and a retracted position to release the said limbs.

7. A device in accordance with one of the preceding claims, **characterised in that** a resilient ring (12) is provided around the end of the limbs (10, 11) of the outer sleeve (5) to stress the said limbs in the direction of the end piece (2).

8. A device in accordance with one of claims 3 to 7, **characterised in that** the outer sleeve (5) has four resiliently deformable limbs, and the inner sleeve (6) has four stop portions, each extending between two successive limbs of the outer sleeve (5).
